# EUROPÄISCHE PATENTANMELDUNG

(11) **EP 1 808 372 A1**
(43) Veröffentlichungstag der Anmeldung: **18.07.2007**
(21) Anmeldenummer: 06000679.8
(22) Anmeldetag: 13.01.2006
(51) Int. Cl.: B64C 11/16, B64C 27/32

(54) **Motorgetriebener Propeller für einen Flugkörper und Verfahren zur Bearbeitung eines Propellers**

(71) Anmelder: Riegerbauer, Hermann, 8430 Leibnitz (AT)
(72) Erfinder: Riegerbauer, Hermann, 8430 Leibnitz (AT)

(57) **Zusammenfassung**

Motorgetriebener Propeller (1) für einen Flugkörper und Verfahren für einen motorgetriebener Propeller (1) mit einer Nabe (2) zur Befestigung an einer mit dem Motor in Drehverbindung stehender Antriebswelle und mit mindestens zwei um eine Propellerachse, sich von einer Nabe wegerstreckende Propellerblätter (3), wobei die Propellerblätter (3) jeweils einen zum Drehmittelpunkt spiegelsymmetrisch umgekehrt verlaufenden Anstellwinkel aufweisen und wobei Elemente (4) vorhanden sind, die derart am Propeller (1) angebracht sind, dass die Effizienz des Propellers gesteigert wird.

## Beschreibung

Die Erfindung betrifft einen motorgetriebener Propeller oder Rotor für einen Flugkörper mit einer Nabe zur Befestigung an einer mit dem Motor in Drehverbindung stehender Antriebswelle und mit mindestens zwei um eine Propellerachse, sich von einer Nabe wegerstreckende Propellerblätter, wobei die Propellerblätter jeweils einen zum Drehmittelpunkt spiegelsymmetrisch umgekehrt verlaufenden Anstellwinkel aufweisen.

Aus der Patentschrift DE 4400806 ist ein motorgetriebener Propeller bekannt, bei dem im Bereich des äußeren Endes jedes Propellerblattabschnittes wenigstens ein über die Außenkante in Drehrichtung des Propellers wegstehender Ansatz angeordnet ist. Dieser wegstehende Ansatz dient zur Geräuschreuzierung. Von Nachteil bei dieser Anordnung ist das die Effizienz des Propellers vermindert wird.

Die Patentschrift US 4362469 beschreibt einen Propeller für Energieerzeugung. An den Propellerspitzen sind Flügel angebracht, um das Abgleiten der Flüssigkeit an den Propellerspitzen zu vermeiden. Weiters sind die Flügel so angebracht, dass eine Entlastung der Propeller bezüglich der auftretenden Zentrifugalkräfte ermöglicht wird. Der Winkel des Flügels an den Propellerspitzen ist kleiner in der Flüssigkeitsanströmrichtung als der Winkel nach dem Propeller in Ausströmrichtung. Diese Anordnung vermindert die Effizienz des Propellers.

Eine Aufgabe der Erfindung ist es daher, einen motorgetriebenen Propeller zu schaffen, welcher eine verbesserte Effizienz aufweist.

Eine weitere Aufgabe der Erfindung ist es einen Flugkörper zu schaffen, der mit dem erfindungsgemäßen Propeller so zusammenwirkt, dass ein effizientere Flugweise ermöglicht wird.

Diese Aufgabe wird erfindungsgemäß mit einem motorgetriebenen Propeller der eingangs genannten Art dadurch gelöst, dass die Propellerblätter mindestens ein Element aufweisen, welches in Anströmrichtung in einem Winkel (α) und in Ausströmrichtung in einem Winkel (β) zur Propellerachse angeordnet ist.

Es ist ein Verdienst der Erfindung, dass die Effizienz eines Propeller erhöht werden kann. Dadurch kann im Vergleich zu einem herkömmlichen Propeller eine hohe Energieersparnis bei gleicher Betriebsart erreicht werden.

In einer bevorzugten Ausführungsform ist der Erfindung ist der Winkel (α) größer oder gleich 90° und der Winkel (β) kleiner oder gleich 90°. Die Summe der Winkel (α) und (β) kann größer als 180° sein.

Günstigerweise ist das Element als eine kreisförmige Scheibe oder Ellipsoid oder als ein kubischer Körper mit abgeflachten Kanten ausgebildet.

Ein weiterer Vorteil der Erfindung liegt darin, dass das Element ein aerodynamisches Anströmprofil in Drehrichtung des Propellers bzw. der Schraube aufweist, um die Strömungsverluste des Elements gering zu halten. Das Element selbst kann eine Flügelform bzw. eine Tragflächenform aufweisen, das heißt der Querschnitt eines Elements kann dem Querschnitt eines Flügels entsprechen, wobei die Seite mit der größeren Krümmung zur Nabe hin gerichtet ist.

In einer bevorzugten Ausführungsform weist das Element zwei Schenkel A und B aufweist, welche von unterschiedlicher Länge und/oder unterschiedlicher Breite und/oder unterschiedlicher Höhe sein können, wobei ein verlaufender Übergang zwischen den Schenkeln gegeben sein kann. Die Breite des Elements sollte mindestens der halben Breite des verwendeten Propellerblattes entsprechen.

Ein weiterer Vorteil der Erfindung liegt darin, dass der Schenkel B länger als der Schenkel A ist und/oder der Schenkel A höher als der Schenkel B ist, wodurch eine stärkere Kompression bzw. Beschleunigung der Luft erreicht werden kann.

In einer bevorzugten Ausführungsform kann der Winkel (α,β) zwischen dem Element und der Propellerachse während des Betriebs des Propellers durch Verstellmittel verstellt werden, wobei das Element beweglich an der Spitze des Propellers angebracht ist. In einer Ausprägung kann im Inneren des Propellers mindestens ein Verschiebeelement vorgesehen sein, welches die Verstellbarkeit in Zusammenwirkung mit einer Auslenkvorrichtung, die im Bereich der Nabe angebracht ist, ermöglicht. Als Verschiebeelement kann eine Schubstange in Zusammenwirkung mit einer Taumelscheibe an der Nabe die gewünschte Wirkung erzeugen. Die Taumelscheibe ist vorzugsweise rund.

In einer weiteren bevorzugten Ausführungsform ist das Element aus Metall, Kunststoff, Holz oder karbon- oder glasfaserverstärktem Kunststoff gefertigt. Das Element kann vorzugsweise aus einem anderen Material gefertigt sein, als der Propeller. Kunststoffelemente können auf grund ihres geringen Gewichts und der leichten Verarbeitbarkeit von Vorteil sein.

Bei einer vorteilhafte Variante eines Propellers ist ein Element am Ende eines Propellerblattes und ein Element in der Mitte zwischen dem Ende und der Nabe angebracht, wodurch eine zweite Strömung mit verstärkender Wirkung erzeugt werden kann und zusätzlich Druck aufgebaut wird.

In der Praxis bewährt hat sich auch, dass eine Steuereinrichtung den Anstellwinkel des Propellers um die Propellerachse verändert.

Um einen verbesserten Propeller zu schaffen, besteht eine vorteilhafte Ausführungsform darin, dass der Propeller und das Element einteilig ausgebildet sind.

Eine günstige Ausführungsform der Erfindung sieht vor, dass ein Propeller mit einem entsprechenden Element verbunden werden kann. Ein Verfahren zur Nachrüstung könnte darin bestehen, dass das Element mit einem Propeller verklebt, verschraubt, verschweisst oder durch ein anderes geeignetes Verfahren verbunden wird.

Einen Ausführungsform mit einem hohen praktischen Nutzen besteht darin, dass die Länge des Propellerblattes und die Länge des Elements mindestens ein Verhältnis vier zu eins aufweisen. Vorzugsweise sollte die Länge des Elements nicht weniger als 5 % der Länge des Propellerblattes betragen.

Um die Interaktion des Propellers mit der wegströmenden Luft zu erhöhen und damit die Effizienz des Propellers zu steigern, kann eine strukturierte Oberfläche auf der, der Anströmrichtung entgegengesetzten Seite am Propellerblatt vorhanden sein. Diese Struktur kann mulden- oder wellenförmig ausgebildet sein, wobei zum Beispiel bei der Wellenform die Wellen in Richtung der Nabe brechen würden und die jeweilige Wellenfront der Symmetrie des Propellerblattes folgen würde. Vorzugsweise entspricht der Abstand zwischen einem Wellenberg und einem Wellental mindestens der geringsten Stärke des verwendeten Propellerblattes. Ein großer Vorteil der Struktur am Propellerblatt ist, dass der Lärm des Propellers im Betrieb stark reduziert wird.

Eine besonders günstige Ausftihrungsform der Erfindung besteht darin, dass ein erfindungsgemäßer Propeller bzw. Rotor mit einem speziell geformten Flugkörper kombiniert wird.

Eine Ausführungsform mit erhöhtem Wirkungsgrad ergibt sich dadurch, dass eine frei am Flügel eines Flugkörpers montierte Antriebsvorrichtung, welche den Propeller antreibt, eine besondere, druckaufbauende Form aufweist.

Die Erfindung samt weiterer Vorteile ist im Folgenden anhand einiger nicht einschränkender Ausführungsbeispiele näher erläutert, welche in den Zeichnungen dargestellt sind. In dieser zeigen:
- Fig. 1: eine Frontansicht des erfmdungsgemäßen Propeller;
- Fig. 2: eine schematische Darstellung des erfindungsgemäßen Propellers von Oben gesehen;
- Fig. 3: eine perspektivische Ansicht einer Variante des erfindungsgemäßen Elementes;
- Fig. 4: eine perspektivische Ansicht eines erfindungsgemäßen Propellers;
- Fig. 5: eine perspektivische Ansicht eines erfindungsgemäßen Propellers mit Struktur;
- Fig. 6: eine perspektivische Ansicht eines erfindungsgemäßen Propellers mit alternativen Struktur;
- Fig.7: Querschnitt einer Auslenkvorrichtung in Zusammenwirkung mit einem Verschiebeelement;
- Fig. 8: Oberansicht eine erfindungsgemäßen Flugkörpers;
- Fig. 9: Seitenansicht eine erfindungsgemäßen Flugkörpers;
- Fig. 10: Vorderansicht eine erfindungsgemäßen Flugkörpers;
- Fig. 11 1: schematische Darstellung eines Propellers mit Antriebsvorrichtung.

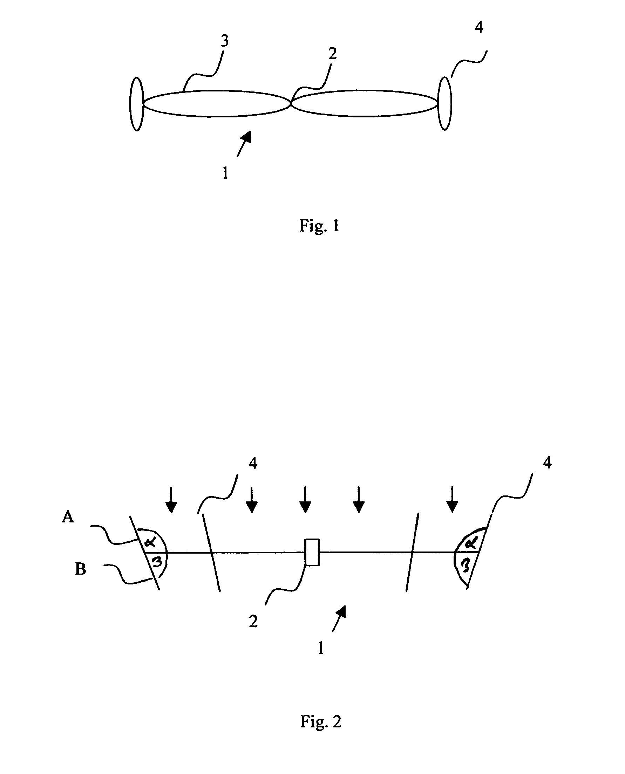

Gemäß Fig. 1 weist der erfindungsgemäßen Propeller (1) eine Nabe (2), zwei Propellerblätter (3) und zwei Elemente (4) auf. Eine Verstärkung der Propellerblattspitzen ist möglich, um so eine höhere Belastung des Propellers zuzulassen. Ein geeignetes Flügelprofil der Propellerblätter (3) ist notwendig, da die einzelnen Bereiche entlang der Propellerblätter (3) sich mit unterschiedlicher Geschwindigkeit bewegen. Die inneren Bereiche bewegen sich langsamer als die Bereich an den Spitzen. Wenn alle Bereiche den gleichen Winkel aufweisen würden, dann würde die anströmende Luft die Bereiche nicht im gleichen Winkel angreifen. Zusätzlich ist ein Propellerblatt (3) leicht verdreht. Diese Verdrehung bewirkt, dass die Vorwärtsbewegung für alle Bereiche etwa gleich groß ist und verhindert damit ein Durchbiegen des Propellerblattes (3).

In der schematischen Darstellung in Fig. 2 entsprechen die eingezeichneten Pfeile der Anströmrichtung auf den Propeller (1). Der Propeller (1) kann mehrere Elemente (4) aufweisen. Jedes Element (4) kann einen bestimmten Anstellwinkel (α) aufweisen, welcher größer als 90° sein kann. Der Ausströmwinkel (β) an der Propellerrückseite wird entsprechend dem Anströmwinkel (α) gewählt.

Stellt man sich die Propellerachse als eine imaginäre Trennlinie vor, so schneidet diese Trennlinie das Element (4) in zwei Teile, Schenkel A und Schenkel B, wie in Fig. 2 gezeigt. Schenkel B kann länger als Schenkel A sein, um die Wirkung des Elements (4) zu erhöhen. Die einzelnen, über die Propellerblattlänge verteilten Elemente (4) können unterschiedliche Anström- und Ausströmwinkel ((α) und (β)) und unterschiedliche Schenkellängen aufweisen.

Die Kompression der Luft durch das Element (4) ist in seiner Art mit der eines Düsenstrahltriebwerks vergleichbar, wobei durch das Element (4) an der Propellerspitze eine Art Zylinder aus Luft aufgebaut wird und keine Luft seitlich verloren gehen kann. Dieser Luftzylinder wirkt wie ein Mantel für die vom Propeller (1) verdrängte Luft und ermöglicht eine bessere Führung der Luft über die Tragflächen vergleichbar einem hochkomprimierten Düsenstrahl, wodurch ein verstärkter Auftrieb erzeugt wird.

Von besonderem Vorteil kann auch sein, dass zwei erfindungsgemäße Propeller (1) in einem Abstand von mindestens 5 cm hintereinander angeordnet und über Stege bzw. erfindungsgemäße Elemente (4) miteinander verbunden sind. Vorzugsweise sollte der Abstand 10 cm betragen.

Ebenso vorstellbar ist es, dass hintereinander angeordneten, erfindungsgemäße Propeller (1) in entgegengesetzter Richtung angetrieben werden.

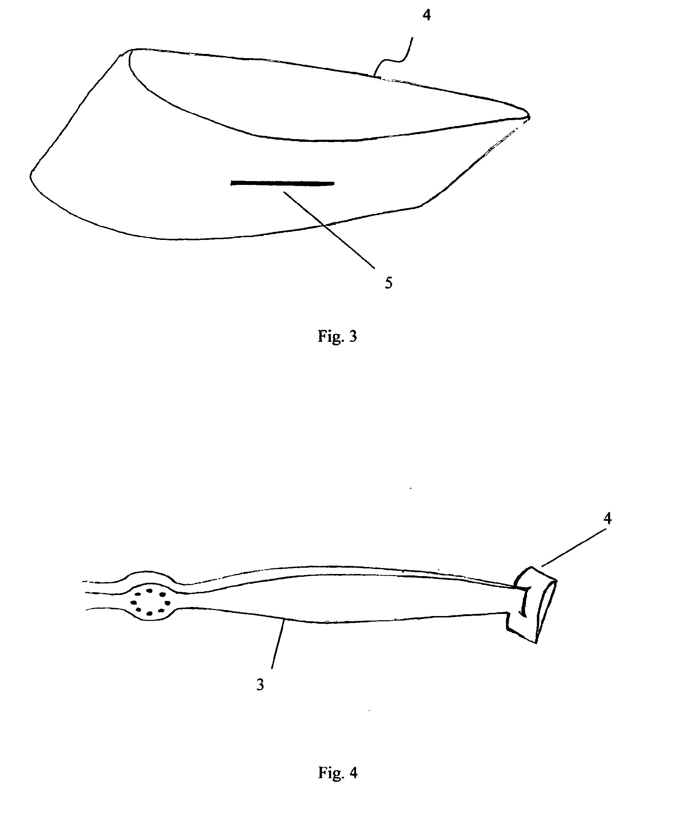

Das erfindungsgemäße Element (4) nach Fig. 3 weißt eine Flügelform auf, wobei die stärker gekrümmte Fläche zur Nabe zeigt. Der Bereich (5) entspricht der Schnittlinie des Propellerblattes (3) mit dem Element (4). Diese Schnittlinie kann auch in einem ändern Winkel als parallel zur Achse des Elements (4) verlaufen.

In Fig. 4 ist der erfindungsgemäße Propeller insbesondere der Übergang einer Propellerspitze in ein Element (4) perspektivisch dargestellt.

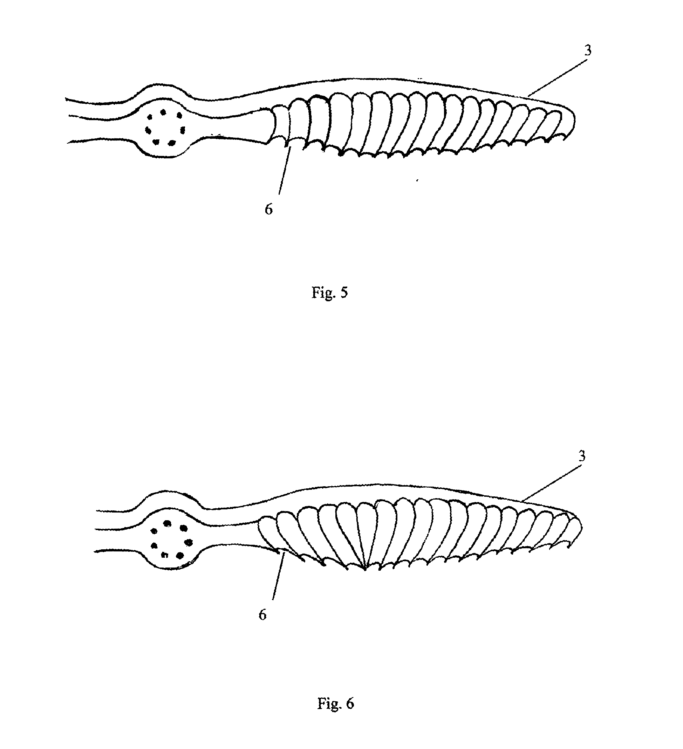

Fig. 5 zeigt eine Hinteransicht des erfindungsgemäßen Propellers (1). Der Propeller (1) kann eine Struktur (6) besitzen, die die Interaktion des Propellers (1) mit der wegströmenden Luft erhöht und eine Kompression der Luft zur Nabe hin unterstützt. In Anströmrichtung kann der Propeller (1) eine angeraute Oberfläche aufweisen, um den Strömungswiderstand zu verringern.

Eine weitere Ausprägungsform der Erfindung findet sich in Fig. 6, welcher eine Struktur (6) zeigt die vorzugsweise auf halber Distanz zwischen Nabe (2) und Propellerspitze zusammenläuft. Diese Struktur (6) kann auf bereits verbaute Propellerblätter (3) nachträglich aufgebracht werden. Ein Aufkleben oder Anschrauben der einzelnen Strukturteile ist vorstellbar. Ebenso könnte ein Kunststoffrelief als Ganzes auf ein Propellerblatt (3) aufgeklebt werden.

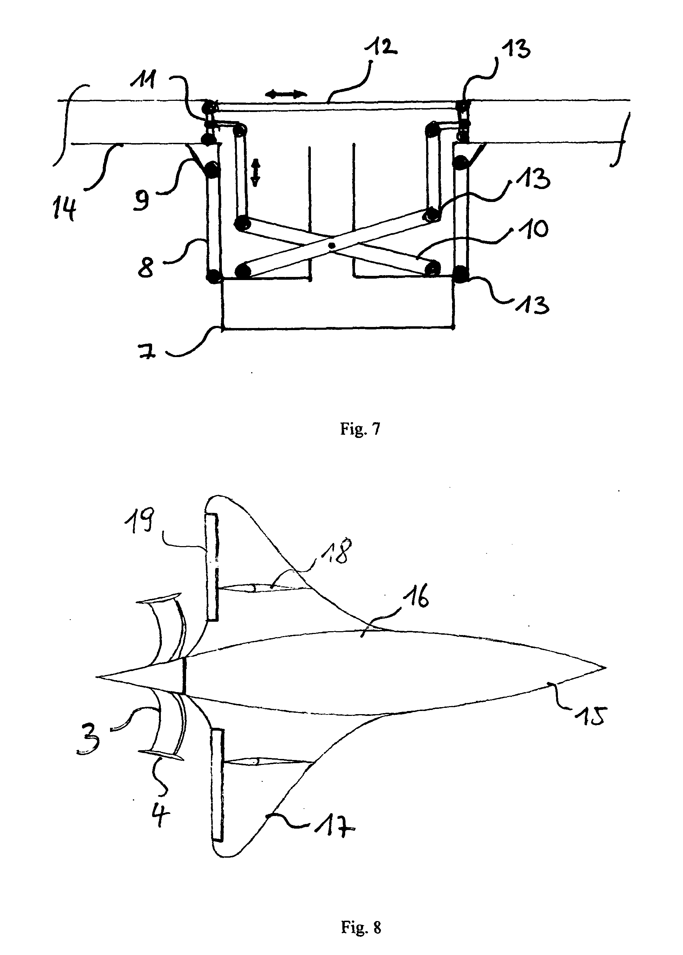

Eine Bauform des Verstellmittels zeigt Fig. 7. Dieses Verstellmittel kann bevorzugt bei Helikoptern eingesetzt werden. Ein Hubschrauber weist eine Vorrichtung auf, mit der die Neigung der Elemente (4) gleichzeitig mit der Neigung der Rotorblätter (3) verstellbar ist. Ein bekannter Hubschrauber umfasst zur Verstellung der Rotorblätter (3) eine Taumelscheibe (7), jeweils über Gelenke (13) beweglich verbundene Steuergestänge (8) (Nicken) und Steuerhörner (9). Ein Taumelscheibenlager (21) erlaubt ein Neigen der sich drehenden Taumelscheibe (7). Durch ein Neigen der Taumelscheibe (7) werden die Rotorblätter (3) verstellt, wodurch zum Beispiel ein Vorwärtsfliegen des Hubschraubers erreicht werden kann. Die gegenständliche Erfindung kann auf die Rotorblätter (3) eines Hubschraubers umgelegt werden, indem eine Vorrichtung vorgesehen ist, die gleichzeitig durch das Neigen der Taumelscheibe (7) auch ein Verstellen der Elemente (4) an den Spitzen der Rotorblätter (3) erreicht. Dazu umfasst die Taumelscheibe (7) eine Verstellvorrichtung (10), die vorzugsweise scherenförmig ist. Diese Verstellvorrichtung (10) ist beweglich an der Taumelscheibe (7) angebracht. Über Gestänge, die beweglich an der oberen Seite der Verstellvorrichtung (10) angebracht sind, können die Elemente (4) an den Spitzen der Rotorblätter (3) verstellt werden. Je nach der Neigung der Taumelscheibe (7) wird die scherenförmige Verstellvorrichtung (10) geöffnet oder geschlossen. Der Doppelpfeil in der Fig. 7 zeigt die Bewegungsrichtung an. Durch die Auslenkvorrichtung (11) und den Verschiebeelement (14) werden die Elemente (4) zyklisch verstellt. Zur Stabilisierung der Verstellung der Elemente (4) kann ein Verbindungsgestänge (12) vorgesehen sein. Durch das Verschieben der Auslenkvorrichtung (11) und dem damit verbundenen Verstellen des Elementes (4) an der Rotorspitze kann ein Pilot rascher auf Störungen im Flugbetrieb reagieren, da die verstellbaren Elemente (4) eine bessere Kontrolle des Hubschraubers erlauben.

In Fig. 8 ist schematisch die Oberansicht eines erfindungsgemäßen Flugkörpers dargestellt. Der Vorderteil (15) des Rumpfe des Flugkörpers ist bevorzugt bis zum Ansatz der Flügel (17) als Verdrängungsteil kegelförmig ausgebildet, wobei die Kanten des Kegels eine Krümmung aufweisen. Der hintere Teil des Rumpfes (16) des Flugkörpers oder Vortriebsteil kann spiegelsymmetrisch die gleich Form auf wie der vordere Teil des Rumpfes (15) aufweisen. Bevorzugt sind die Leitwerke (18) an den Flügeln (17) so angebracht, dass, wenn die Achse der Leitwerke (18) verlängert würde, die Propellerblätter (3) innerhalb der beiden Leitwerksachsen zu liegen kommen würden. Die Leitwerke (18) unterstützen auch die Führung der vom Rumpf verdrängten Luft zum Propeller (1) hin. Im Normalbetrieb bzw. Flugbetrieb wird der Propeller (1) dadurch besser von der verdrängten Luft beströmt. Würde man die Leitwerke (18) als Mantel eine Zylinders ansehen, so wären die Propellerblätter (3) innerhalb der Einhüllenden. Eine gute Wirkung kann erzielt werden, wenn die Leitwerke (18) die gleiche Höhe wie der Rumpf des Flugkörpers aufweisen. Von Vorteil kann auch sein, dass die Leitwerke (18) miteinander verbunden sind und eine solche Ausdehnung aufweisen, das sie wie Halbschalen oberhalb und unterhalb des Flugkörpers angeordnet sind. Die Ruder (19) an den Flügeln (17) können sich über die ganze Breite des jeweiligen Flügels (17) erstrecken, bevorzugt liegen sie aber zwischen den Flügelspitzen und den Leitwerken (18). Die Ausführungsform in Fig. 8 zeigt zwei Propellerblätter (3), wobei der Propeller (1) am hinteren Ende des Rumpfes (16) angeordnet ist. Alternativ können auch mehr als zwei Propellerblättern (3) vorhanden sein. Ebenso ist es möglich die gegenständliche Erfindung auf einen Flugkörper mit mehr als einem Motor mit dazugehörigem Propeller (1) umzulegen. In dieser Ausführungsform kann mindestens ein Propeller (1) an jedem Flügel (17) des Flugkörpers angebracht sein. Ein Propeller (1) kann im hinteren Bereich eines Flügels (17) zwischen Rumpf (16) und Leitwerk (18) angebracht sein. Weiters kann mindestens ein weiteres Leitwerk (18) pro Flügel (17) vorgesehen sein, wobei der Rumpf des Flugkörpers und das Leitwerk (18) nächstliegend zum Rumpf als Einhüllende für einen ersten Propeller (1) und zwei Leitwerke auf einem Flügel (17) als Einhüllende für einen zweiten Propeller (1) gesehen werden können.

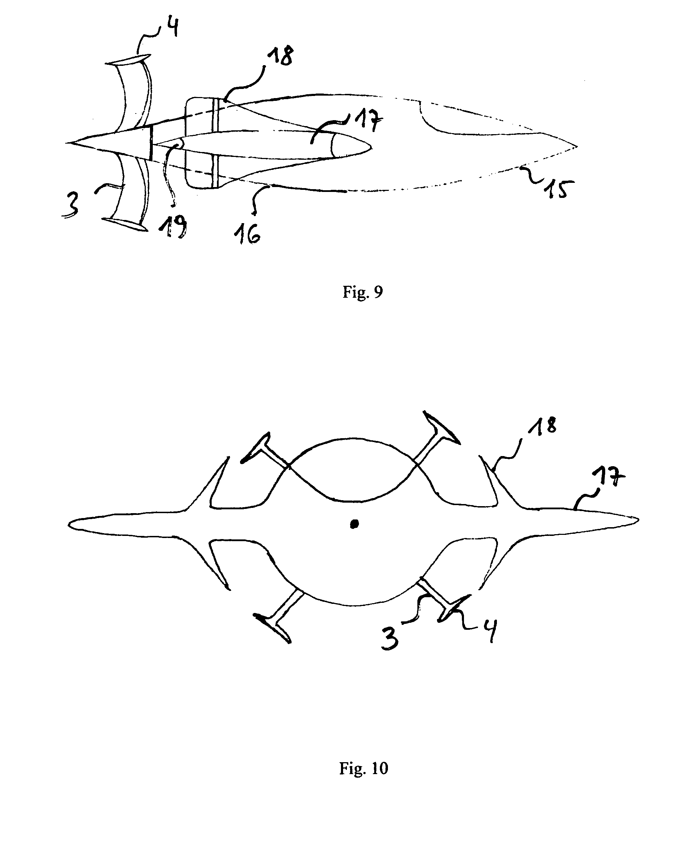

Gemäß Fig. 9 weist der erfindungsgemäße Flugkörper einen vorderen (15) und hinteren (16) Rumpfteil auf. Die Flügel (17) sind mit mindestens einem Leitwerk (18) ausgestattet und weisen Ruder (19) auf. Die Stellung der Propellerblätter (3) in Fig. 9 ist rechtwinkelig zu jener in Fig. 8 gezeichnet.

Eine Ausprägung der Erfindung, wie in der Vorderansicht in Fig. 10 gezeigt, weist vier Propellerblätter (3) auf. Die Leitwerke (18) an den Flügeln (17) beschreiben eine Einhüllende für die Propellerblätter (3). In einer vorteilhaften Ausführungsform weisen die Leitwerke (18) eine Neigung zum Rumpf des Flugkörpers auf. In Näherung können die Leitwerke (18) als konzentrisch zum Rumpf des Flugkörpers ausgebildet angesehen werden, wobei sich die Leitwerke (18) zu den Leitwerkspitzen hin verjüngen können.

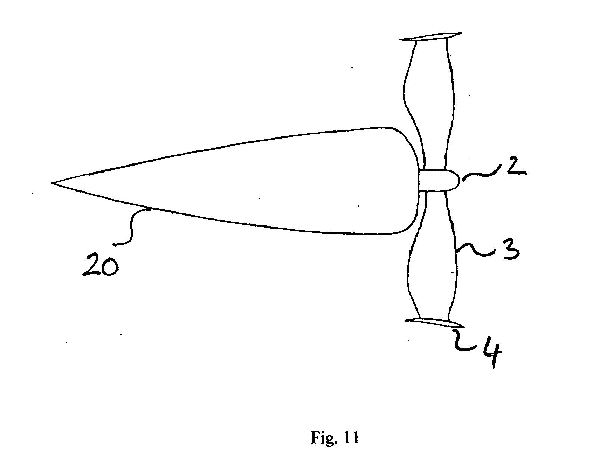

In Fig. 11 ist ein erfindungsgemäßer Propeller (1) samt aerodynamisch optimal gestalteter Antriebsvorrichtung (20) dargestellt. Dies Anordnung ist geeignet, um an der Vorderseite eines Flügels (17) eines Flugkörpers angebracht zu werden. Flugkörper mit mehreren dieser Anordnungen an jedem Flügel (17) sind vorstellbar.

## Patentansprüche

1. Motorgetriebener Propeller (1) mit einer Nabe (2) zur Befestigung an einer mit dem Motor in Drehverbindung stehender Antriebswelle und mit mindestens zwei um eine Propellerachse, sich von einer Nabe wegerstreckende Propellerblätter (3),
wobei die Propellerblätter (3) jeweils einen zum Drehmittelpunkt spiegelsymmetrisch umgekehrt verlaufenden Anstellwinkel aufweisen, wobei die Propellerblätter (3) mindestens ein Element (4) aufweisen, welches in Anströmrichtung in einem Winkel (α) und in Ausströmrichtung in einem Winkel (β) zur Propellerachse angeordnet ist und wobei das Element (4) ein aerodynamisches Anströmprofil in Form eines Flügels in Drehrichtung des Propellers (1) aufweist, wobei die Flügeloberseite zur Nabe gerichtet ist
**dadurch gekennzeichnet, dass**
der Winkel (α) größer als 90° und der Winkel (β) kleiner als 90° ist.

2. Motorgetriebener Propeller (1) nach einem der vorangegangenen Ansprüche,
**dadurch gekennzeichnet, dass**
das Element (4) zwei Schenkel A und B aufweist, welche von unterschiedlicher Länge und/oder Höhe sein können.

3. Motorgetriebener Propeller (1) nach Anspruch 2,
**dadurch gekennzeichnet, dass**
der Schenkel B länger als der Schenkel A ist und/oder der Schenkel A höher als der Schenkel B ist.

4. Motorgetriebener Propeller (1) nach Anspruch 1,
**dadurch gekennzeichnet, dass**
ein Element (4) am Ende eines Propellerblattes (3) und ein Element (4) in der Mitte zwischen dem Ende und der Nabe angebracht sind.

5. Motorgetriebener Propeller (1) nach Anspruch 1,
**dadurch gekennzeichnet, dass**
der Propeller (1) und das Element (4) einteilig ausgebildet sind.

6. Motorgetriebener Propeller (1) nach Anspruch 1,
**dadurch gekennzeichnet, dass**
die Länge des Propellerblattes (3) und die Länge des Elements (4) mindestens ein Verhältnis vier zu eins aufweisen.

7. Motorgetriebener Propeller (1) nach Anspruch 1,
**dadurch gekennzeichnet, dass**
das Element (4) verstellbar am Propellerblatt (3) angebracht ist.

8. Motorgetriebener Propeller (1) mit einer Nabe (2) zur Befestigung an einer mit dem Motor in Drehverbindung stehender Antriebswelle und mit mindestens zwei um eine Propellerachse, sich von einer Nabe wegerstreckende Propellerblätter (3),
wobei die Propellerblätter (3) jeweils einen zum Drehmittelpunkt spiegelsymmetrisch umgekehrt verlaufenden Anstellwinkel aufweisen,
**dadurch gekennzeichnet, dass**
das Propellerblatt (3) an seiner Rückseite eine strukturierte Oberfläche (6) aufweist.

9. Flugkörper umfassend mindestens einen motorgetriebenen Propeller (1) nach Anspruch (1), mindestens zwei Flügel (17), mindestens zwei an den Flügeln (17) angeordnete Leitwerke (18) und einen aerodynamischen Rumpf (15, 16),
**dadurch gekennzeichnet, dass**
die Leitwerke (18) eine Einhüllende für den Propeller (1) beschreiben.

10. Hubschrauber umfassend mindestens einen Propeller (1) nach Anspruch 7,
**dadurch gekennzeichnet, dass**
dieser mindestens eine Auslenkvorrichtung (11) aufweist, welche über mindestens ein Verschiebeelement (14) mit dem Element (4) verbunden ist.
